# EUROPÄISCHE PATENTSCHRIFT

(11) **EP 2 823 739 B1**
(45) Veröffentlichungstag und Bekanntmachung des Hinweises auf die Patenterteilung: **10.05.2017**
(21) Anmeldenummer: 14176253.4
(22) Anmeldetag: 09.07.2014
(51) Int. Cl.: A47J 43/07

(54) **Elektrisch betreibbares Küchengerät mit Drehschalter**
Electrically operable kitchen appliance with a rotary switch
Équipement ménager pouvant fonctionner de manière électrique doté d'un interrupteur à manette

(30) Priorität: 10.07.2013 DE 102013213489
(43) Veröffentlichungstag der Anmeldung: 14.01.2015
(73) Patentinhaber: BSH Hausgeräte GmbH, 81739 München (DE)
(72) Erfinder: Orbanic, Henri, 1000 Ljubljana (SI); Pacnik, Roman, 2383 Smartno pri Slovenj Gradcu (SI)

(56) Entgegenhaltungen:
- US-A- 1 633 233
- US-A- 2 161 070
- US-A- 4 300 525

## Beschreibung

### Gebiet der Erfindung

Die Erfindung betrifft ein elektrisch betreibbares Küchengerät gemäß des Oberbegriffs des Anspruchs 1 und die Verwendung eines Drehschalters in einem elektrisch betreibbaren Küchengerät gemäß Anspruch 13.

### Hintergrund der Erfindung

Es sind elektrisch betreibbare Küchengeräte bekannt, die einen Drehschalter, der eine Drehscheibe aufweist, umfassen, wobei der Drehschalter zwei oder mehr Stellpositionen für die Drehscheibe aufweist, von denen eine oder mehr Stellpositionen als instabile Stellpositionen eingerichtet sind, in der oder in denen die Drehscheibe temporär, unter Einwirkung einer äußeren Haltekraft, verharren kann. Dokumente zum Stand der Technik sind: US4300525, US2161070, US1633233. Ferner ist aus der EP 615268 A1 eine Vorrichtung zum Herstellen eines elektrischen Kontaktes bekannt. Die Vorrichtung umfasst eine Drehscheibeneinrichtung, die mit einer daran befindlichen Handhabe rotiert werden kann. Wenn ein Wirkmittel nicht in Betrieb ist, verursacht eine Rückstellfeder, dass die Drehscheibe aus einer Stellung wegrotiert wird, wodurch hervorgerufen wird, dass stationäre Kontakte von der Drehscheibe wegbewegt werden.

Die Schrift US 2,782,012 lehrt eine Zeitsteuervorrichtung für Nahrungsmittelmixer und Ähnliches. Nach einer vorbestimmten Zeit öffnet die Vorrichtung einen Schaltkreis, um den elektrisch betreibbaren Mixer anzuhalten.

Die US 2010/0000417 A1 offenbart schließlich eine Kochkontrolleinheit für Küchengeräte. Die Kochkontrolleinheit umfasst einen drehbaren Kontrollknopf, der eine Stellposition umfasst, in der die Kochkontrolleinheit von dem Küchengerät gelöst werden kann.

### Der Erfindung zugrunde liegende Aufgabe

Der Erfindung liegt die Aufgabe zugrunde, ein elektrisch betreibbares Küchengerät zu schaffen, das gegenüber dem Stand der Technik verbessert ist. Außerdem soll ein spezieller Drehschalter erstmals in einem elektrisch betreibbaren Küchengerät verwendet werden. Insbesondere soll dadurch erreicht werden können, dass die Benutzerfreundlichkeit des Küchengerätes verbessert wird.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird durch ein elektrisch betreibbares Küchengerät gelöst, das einen Drehschalter, der eine Drehscheibe aufweist, umfasst, wobei der Drehschalter zwei oder mehr Stellpositionen für die Drehscheibe aufweist, von denen eine oder mehrere Stellpositionen als instabile Stellpositionen eingerichtet sind, in der oder in denen die Drehscheibe temporär, unter Einwirkung einer äußeren Haltekraft, verharren kann, wobei das Küchengerät ein Wirkmittel zum Erzeugen einer äußeren Haltekraft aufweist, durch die die Drehscheibe in einer oder in mehreren instabilen Stellpositionen temporär gehalten werden kann. Zudem wird die Aufgabe durch die Verwendung eines Drehschalters in einem elektrisch betreibbaren Küchengerät gemäß Anspruch 13 gelöst.

Ein Drehschalter im Sinne der vorliegenden Erfindung ist ein elektrischer Schalter. Er umfasst zwei oder mehr Stellpositionen für die Drehscheibe. Eine oder mehr Stellpositionen sind instabile Stellpositionen des Drehschalters. Eine oder mehr Stellpositionen können stabile Stellpositionen sein. Jede der Stellpositionen für die Drehscheibe korrespondiert mit einer Schaltposition des Drehschalters. Die Drehscheibe des Drehschalters kann gegenüber einem Tragrahmen für die Drehscheibe rotiert werden. Auf diese Weise kann je nach ausgewählter Stellposition der Drehscheibe eine andere der zwei oder mehr damit korrespondierenden Schaltpositionen des Drehschalters eingestellt werden.

Eine Stellposition der Drehscheibe, in der die Drehscheibe permanent, ohne Einwirkung einer äußeren Haltekraft, verharren kann, ist eine stabile Stellposition. Das bedeutet, dass der Drehschalter in einer korrespondierenden stabilen Schaltposition solange verbleibt, wie nicht durch eine äußere Krafteinwirkung auf die Drehscheibe eine andere Stellposition der Drehscheibe angewählt wird.

Entsprechend ist eine Stellposition für die Drehscheibe, in der die Drehscheibe temporär, unter Einwirkung einer äußeren Haltekraft, verharren kann, eine instabile Stellposition im Sinne der Erfindung. Endet die äußere Krafteinwirkung, verlässt die Drehscheibe die instabile Stellposition. Das bedeutet, dass der Drehschalter die instabile Schaltposition nur solange beibehält, wie er durch äußere Krafteinwirkung auf die Drehscheibe dazu gezwungen ist. Eine äußere Krafteinwirkung kann in einer manuellen Krafteinwirkung des Benutzers bestehen, die den Drehschalter in der instabilen Schaltposition hält. In den Ausführungsformen der vorliegenden Erfindung ist jedoch eine mechanische, elektrische oder magnetische Blockade des Drehschalters durch ein Wirkmittel vorgesehen, das seitens des Küchengeräts angeordnet ist und die Drehscheibe temporär daran hindert, die instabile Stellposition zu verlassen.

Weil das Küchengerät ein solches Wirkmittel zum Erzeugen einer äußeren Haltekraft aufweist, durch die die Drehscheibe in einer oder in mehreren instabilen Stellpositionen temporär gehalten werden kann, muss der Benutzer nicht länger durch seine manuelle Kraft die Drehscheibe des Schalters in der instabilen Stellposition halten. Ist das Wirkmittel aktiviert, stabilisiert es also, so lange es aktiviert ist, die instabile Stellposition der Drehscheibe und somit die instabile Schaltposition des Drehschalters. Der Benutzer kann in Folge dessen andere Aufgaben wahrnehmen, anstelle die Drehscheibe in ihrer instabilen Stellposition zu halten. Dadurch kann der Benutzer Zeit bei der Zubereitung von Speisen effizienter nutzen. Durch die Erfindung wird also die Benutzerfreundlichkeit eines elektrisch betreibbaren Küchengerätes verbessert. Entsprechend wird, anders ausgedrückt, die Benutzerfreundlichkeit eines elektrisch betreibbaren Küchengerätes dadurch verbessert, dass ein Drehschalter in dem elektrisch betreibbaren Küchengerät verwendet wird, und das Küchengerät ein Wirkmittel zum Erzeugen einer äußeren Haltekraft aufweist, sodass der Drehschalter durch diese äußere Haltekraft in einer oder mehreren instabilen Schaltpositionen temporär gehalten werden kann.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Bevorzugt ist, dass das elektrisch betreibbare Küchengerät eine Universalküchenmaschine ist. Bei Universalküchenmaschinen kann es wünschenswert sein, Funktionsprogramme zur Nahrungsmittelbearbeitung nur in festgelegten Zeitintervallen zu betreiben. Speziell dann kann es von besonderem Vorteil sein, wenn das Küchengerät ein Wirkmittel aufweist, durch das der Drehschalter temporär in einer instabilen Schaltposition gehalten werden kann. Der Benutzer kann dann beispielsweise andere Küchentätigkeiten verrichten, während die Universalküchenmaschine selbsttätig und ohne seinen manuellen Eingriff über ein festgelegtes Zeitintervall einen Bearbeitungsauftrag ausführt. Vorzugsweise ist das Küchengerät, vorzugsweise die Universalküchenmaschine, so eingerichtet, dass das Wirkmittel nach Ablauf eines voreingestellten Zeitintervalls automatisch seine Wirkung verlieren kann. Besonders vorzugsweise umfasst ein derart eingerichtetes Küchengerät eine Steuereinheit, die in Ausführungsformen einen Mikroprozessor oder auch einen programmierbaren Zeitgeber aufweisen kann. Das Funktionsprogramm kann insbesondere bei solchen Küchengeräten, die eine Steuereinheit aufweisen, mittels eines temporär wirkenden Wirkmittels zuverlässig zu einem gewünschten Zeitpunkt und ohne Zutun des Benutzers beendet werden. Es ist bevorzugt, dass die Steuereinheit dafür eingerichtet ist, das Wirkmittel nach einem vorgegebenen Zeitintervall zu deaktivieren. Alternativ oder zusätzlich kann die Steuereinheit dafür eingerichtet sein, das Wirkmittel nach einem vorgegebenen Zeitintervall zu aktivieren. Ein bevorzugter Drehschalter ist ein Drehschalter, der dafür eingerichtet ist, den Motor der elektrisch betreibbaren Küchenmaschine zum Antrieb von Bearbeitungswerkzeugen für Nahrungsmittel in Betrieb zu versetzen und/oder wieder abzuschalten. Statt einer Universalküchenmaschine kann das elektrisch betreibbare Küchengerät auch ein Food Processor, ganz allgemein eine Standküchenmaschine oder aber ein Handmixer, ein Stabmixer oder eine Saftpresse sein.

Vorzugsweise weist die Drehscheibe eine Handhabe auf. Eine Handhabe im Sinne der vorliegenden Erfindung ist ein Betätigungselement an der Drehscheibe, mittels dessen ein Benutzer die Drehscheibe manuell in eine von ihm gewünschte Stellposition verstellen kann. So kann ein entsprechender Drehschalter für solche Funktionen eines Küchengerätes besonders vorteilhaft eingesetzt werden, bei denen eine Interaktion des Benutzers mit dem Drehschalter erwünscht ist. Vorzugsweise weist eine Drehscheibe eines Drehschalters zum Aktivieren oder Deaktivieren des Motors der Küchenmaschine eine Handhabe auf. Andere Drehschalter mit Handhabe sind solche, mit denen der Benutzer die Betriebsleistung des Motors anwählen kann. Damit dem Benutzer eine einfache Interaktion mit dem Drehschalter möglich ist, ist der Durchmesser der Drehscheibe in einer Aufsicht senkrecht zur Rotationsebene der Drehscheibe vorzugsweise größer als 3 Zentimeter, besonders vorzugsweise größer als 5 Zentimeter. Eine bevorzugte Handhabe überspannt den Mittelpunkt der Drehscheibe in Form eines im Wesentlichen quaderförmigen Balkens, der auf der Rotationsebene der Drehscheibe liegt. In anderen Ausführungsformen der Erfindung umfasst die Drehscheibe keine Handhabe. Dann ist die Oberfläche der Drehscheibe vorzugsweise als ebene Oberfläche ausgestaltet. Eine Drehscheibe ohne Handhabe kommt vorzugsweise dann zum Einsatz, wenn es sich um einen Drehschalter handelt, der nicht unmittelbar vom Benutzer bedient werden können sollen. Solch ein Drehschalter kann in einem Relais oder einer automatischen Schaltvorrichtung eines elektrisch betreibbaren Küchengeräts angeordnet sein, also dem unmittelbaren manuellen Zugriff des Benutzers entzogen sein. Vorzugsweise wird solch ein Drehschalter ohne Handhabe über einen Mikroprozessor angesteuert, der dafür eingerichtet ist, das Betätigen des Drehschalters vorzunehmen. Um die Drehscheibe zwischen verschiedenen Stellpositionen verlagern zu können, kommen in solchen Fällen als Ersatz für die Handhabe andere Betätigungselemente für die Drehscheibe zum Einsatz. Sie können mechanisch, elektrisch oder magnetisch die Drehscheibe rotieren. Geeignete Betätigungselemente sind in diesem Fall beispielsweise Elektromagneten oder mechanische Stellschieber. Diese Betätigungselemente können vorzugsweise entweder automatisch durch eine elektronische Steuereinheit oder mittelbar manuell durch den Benutzer, beispielsweise durch ein Tastenfeld am Gehäuse des Küchengeräts oder ein mechanisches Kraftübertragungssystem, wie beispielsweise eine Drehkulisse oder ein Hebelsystem, aktiviert oder auch deaktiviert werden.

Bevorzugt ist, dass eine oder mehrere der Stellpositionen der Drehscheibe stabile Stellpositionen sind. Besonders bevorzugt ist, dass die stabilen Stellpositionen diskrete Stellpositionen sind. Diskreten Stellpositionen der Drehscheibe entsprechen diskrete Schaltpositionen des Drehschalters. Diskrete Stellpositionen, in denen beispielsweise die Drehscheibe des Drehschalters verrasten kann, können für den Benutzer besonders vorteilhaft sein, da sie für den Benutzer eine einfache Anwahl der Schaltpositionen ermöglichen. Es ist aber auch möglich, dass eine oder mehr der stabilen Stellpositionen als kontinuierliche Stellpositionen ausgeführt sind, in denen die Drehscheibe vorzugsweise durch Reibung stabil gehalten wird. So kann eine stufenlose Änderung der stabilen Schaltpositionen ermöglicht werden. Eine bevorzugte diskrete Stellposition ist eine Nullstellung des Drehschalters.

In einer bevorzugten Ausführungsform dienen eine oder mehrere der Stellpositionen der Drehscheibe dazu, eine Motorleistung des Küchengeräts auszuwählen. Vorzugsweise sind einige oder alle dieser Stellpositionen stabile Stellpositionen. Durch Betätigung des Küchengerätes kann der Benutzer beispielsweise aus einer Mehrzahl von diskreten Motorleistungen abhängig von der gewünschten Nahrungsmittelbearbeitungsaufgabe auswählen. Vorzugsweise ist eine der stabilen Stellpositionen eine Nullstellung. In dieser wird der Motor der Küchenmaschine deaktiviert oder in einen Ruhezustand versetzt, so dass er keine Leistung erzeugt. Weitere Stellpositionen können zwischen der Nullstellung und einer Maximalstellung einer Vielzahl von Motorleistungen entsprechen, vorzugsweise Motorleistungen von 50, 100, 200, 300, 500, 800 oder auch 1000 Watt. Es ist bevorzugt, dass der Drehschalter so ausgelegt ist, dass eine Drehung der Drehscheibe aus einer stabilen Nullstellung heraus in die eine Drehrichtung in eine instabile Schaltposition führt, während eine Drehung in die entgegengesetzte Drehrichtung in eine weitere stabile Schaltposition führt. Besonders bevorzugt ist, dass sich an die weitere stabile Schaltposition eine oder mehrere zusätzliche stabile Schaltpositionen anschließen. In Ausführungsformen kann aber auch vorgesehen sein, dass der Drehschalter als Stellpositionen für die Drehscheibe nur eine oder mehrere instabile Stellpositionen aufweist und zudem genau eine stabile Stellposition aufweist. Dann ist die stabile Stellposition vorzugsweise eine Nullstellung der Drehscheibe. Vorzugsweise ist die Drehscheibe des Drehschalters in diese Nullstellung durch ein elastisches Element vorgespannt.

Vorzugsweise ist das Wirkmittel ein elektromechanisches Wirkmittel. Ein bevorzugtes elektromechanisches Wirkmittel ist ein Elektromagnet. Weitere mögliche elektromechanische Wirkmittel sind Aktoren, die mechanische Sperrelemente bewegen, oder elektromagnetische Bremsen. Vorteil eines elektromechanischen Wirkmittels kann sein, dass es über einen Schaltkreis einfach, vorzugsweise automatisch, aktiviert und wieder deaktiviert werden kann. Vorzugsweise kann dies mittels eines in dem Schaltkreis angeordneten Mikroprozessors erfolgen. Der Mikroprozessor ist vorzugsweise Teil einer Steuereinheit. So kann eine zeitgesteuerte Aktivierung und Deaktivierung des elektromechanischen Wirkmittels erreicht werden. Das Wirkmittel kann in bevorzugten Ausführungsformen für ein bestimmtes Zeitintervall aktiviert werden, um die Drehscheibe in einer oder mehreren instabilen Stellpositionen temporär halten zu können. Nach dem Deaktivieren des Wirkmittels, das vorzugsweise automatisch zeitgesteuert erfolgt und woraufhin die Drehscheibe die instabile Stellposition vorzugsweise automatisch verlässt, werden das Küchengerät oder dessen Motor automatisch abgeschaltet oder in einen Standby-Modus versetzt, indem die Drehscheibe in eine Nullstellung rotiert. Ein weiterer erreichbarer Vorteil bei der Verwendung eines elektromechanischen Wirkmittels ergibt sich daraus, dass bei einem Stromausfall das Wirkmittel deaktiviert wird, die Drehscheibe die instabile Stellposition verlässt und vorzugsweise in eine Nullstellung zurückkehrt, so dass bei Rückkehr der Stromversorgung das Küchengerät nicht automatisch wieder aktiv wird. Dadurch kann die Sicherheit eines erfindungsgemäßen Küchengeräts verbessert sein. In alternativen Ausführungsformen wird nach der Betrieb des Küchengeräts nach Deaktivierung des elektromechanischen Wirkmittels automatisch in einem anderen Funktionsprogramm fortgesetzt, indem die Drehscheibe automatisch in eine diesem Funktionsprogramm entsprechende stabile oder instabile Stellposition rotiert.

Bevorzugt ist, dass das Küchengerät für die Drehscheibe ein elastisches Rückstellelement aufweist. So kann die Drehscheibe auf einfache Weise automatisch aus der instabilen Stellposition herausgedreht werden, sofern das Wirkmittel zum Halten der instabilen Stellposition nicht aktiv ist. Eine Drehscheibe mit einem elastischen Rückstellelement ist aus dem Drehschalter der EP 615268 A1 bekannt. Hinsichtlich Aufbau und Funktionsweise des Drehschalters ist diese Schrift durch Zitat Teil der vorliegenden Offenbarung. Besonders bevorzugt ist, dass die Drehscheibe durch das elastische Rückstellelement in Richtung einer stabilen Stellposition vorgespannt ist. Nochmals besonders bevorzugt ist, dass die stabile Stellposition, in die die Drehscheibe durch das elastische Rückstellelement vorgespannt ist, einer Nullstellung der Drehscheibe entspricht. Durch diese Ausführungsform kann erreicht werden, dass nach Deaktivieren des Wirkmittels die Drehscheibe automatisch in die Nullstellung zurückgeführt wird. So kann beispielsweise nach Ablauf eines bestimmten Zeitintervalls ein Funktionsprogramm, während dessen der Drehschalter durch das Wirkmittel in der instabilen Schaltposition gehalten wird, enden und daraufhin der Motor des Küchengeräts oder das Küchengerät als Ganzes aufgrund der automatischen Rückführung der Drehscheibe mittels des elastischen Rückstellelements in die Nullstellung abgeschaltet oder zumindest in einen Ruhezustand zurückgeführt werden. Statt einer automatischen Rückstellung in die Nullstellung ist jedoch auch möglich, dass die Rückstellung durch das elastische Rückstellelement in eine andere stabile Schaltposition, die von einer Nullstellung abweicht, erfolgt. Auch ist es in Ausführungsformen möglich, dass die Rückstellung in eine andere instabile Stellposition erfolgt. Vorzugsweise kann auf diese Weise vollautomatisch eine sich wiederholende Umschaltung zwischen zwei sich abwechselnden Betriebsmodi erfolgen. Ein elastisches Rückstellelement für die Drehscheibe kann in Ausführungsformen entfallen, falls die Rückstellung der Drehscheibe auf eine andere Weise vorgesehen ist. Vorzugsweise wird in solchen Fällen die Schwerkraft als rückstellende Kraft für die Drehscheibe genutzt.

Bevorzugt ist, dass das elastische Rückstellelement als Schraubenfeder ausgeführt ist. Schraubenfedern sind bekannte Rückstellelemente. Sie sind preisgünstig und in großer Zahl verfügbar. Statt einer Schraubenfeder kommt aber auch jedes andere geeignete mechanische Rückstellelement in Frage. Vorzugsweise ist es aus Metall, besonders vorzugsweise aus Federstahl geformt. Ein solches Rückstellelement kann beispielsweise eine Blattfeder sein. Alternativ ist das elastische Rückstellelement als elastisch federndes Kunststoffelement gefertigt. Zum Beispiel kann dieser Kunststoff ein Polymermaterial sein.

Vorzugsweise ist der Drehschalter als separate Baugruppe ausgeführt. Vorzugsweise umfasst die Baugruppe einen Tragrahmen und eine Drehscheibe mit Handhabe, die von dem Tragrahmen aufgenommen wird. Besonders vorzugsweise besteht die Baugruppe des Drehschalters aus diesem Tragrahmen und dieser Drehscheibe. Diese Ausführungsform kann den Vorteil haben, dass der Drehschalter einfach an dem elektrisch betreibbaren Küchengerät angebracht werden kann. Verbesserte Drehschalter können auf diese Weise einfach in bereits bestehenden elektrisch betreibbaren Küchengeräten nachgerüstet werden. Vorzugsweise ist als Befestigungsmittel zwischen Baugruppe und Küchengerät eine lösbare Verbindung vorgesehen. Sie kann beispielsweise über Schrauben oder Steckverbinder realisiert sein. So kann ein defekter Drehschalter einfach ersetzt werden, falls er als separate Baugruppe des elektrisch betreibbaren Küchengerätes ausgeführt ist. In einigen Ausführungsformen ist jedoch vorgesehen, dass die Baugruppe des Drehschalters permanent, also nicht lösbar, mit dem Küchengerät verbunden ist. Sie kann vollständig oder teilweise einstückig mit dem Gehäuse des elektrisch betreibbaren Küchengerätes ausgeführt sein. Alternativ kann sie über Nieten oder Verkleben mit dem Küchengerät verbunden sein. So kann der Drehschalter besonders ästhetisch in die Gehäuseform des Küchengerätes integriert sein oder auch besonders stabil an dem Küchengerät befestigt sein. Beispielsweise kann der Tragrahmen mit dem Gehäuse einteilig, beispielsweise an dieses angespritzt, ausgeführt sein und die Drehscheibe ist als separates Element drehbeweglich in den Tragrahmen eingesetzt.

Bevorzugt ist, dass das Wirkmittel an der separaten Baugruppe angeordnet ist. So kann bei einem Defekt des Wirkmittels einfach die Baugruppe ausgetauscht und somit das Wirkmittel schnell ersetzt werden. In bevorzugten Ausführungsformen ist das Wirkmittel an dem Tragrahmen für die Drehscheibe angeordnet. Alternativ kann das Wirkmittel an der Drehscheibe selbst angeordnet sein. An dem jeweils anderen Element kann ein korrespondierendes Gegenwirkmittel vorhanden sein, vorzugsweise bei elektromechanischen Wirkmitteln, sodass erreicht werden kann, dass das Wirkmittel eine äußere Haltekraft erzeugen kann, durch die der Drehschalter in einer instabilen Schaltposition temporär gehalten werden kann. Statt das Wirkmittel und/oder das Gegenwirkmittel an der separaten Baugruppe anzuordnen, ist jedoch auch möglich, das Wirkmittel oder das Gegenwirkmittel an einem anderen Bauteil des elektrisch betreibbaren Küchengerätes anzuordnen. Beispielsweise kann das Wirkmittel oder das Gegenwirkmittel am Gehäuse des elektrisch betreibbaren Küchengerätes oder an einer Platine des elektrisch betreibbaren Küchengerätes angeordnet sein. Bevorzugt ist, dass dann ein entsprechendes Gegenwirkmittel oder Wirkmittel seitens des Drehschalters, vorzugsweise seitens der Drehscheibe, angeordnet ist.

Bevorzugt ist, dass das Küchengerät so eingerichtet ist, dass es einen Bedienbereich aufweist, an dem eines oder mehrere Funktionsprogramme des Küchengeräts auswählbar sind. Der Bedienbereich kann beispielsweise ein Tastenfeld oder auch ein berührungssensitives Display sein. Auch ein Kippschalter oder ein weiterer Drehschalter können geeignete Bedienbereiche bilden. Funktionsprogramme sind beispielsweise Kneten, Pürieren, Aufschlagen oder auch Mixen. Auch andere Funktionsprogramme kommen in Frage. Vorzugsweise ist das Küchengerät dafür eingerichtet, die Funktionsprogramme nach deren manueller Auswahl automatisch auszuführen. Dazu kann eine Steuereinheit, vorzugsweise mit Mikroprozessor, in dem Küchengerät vorgesehen sein.

In einer bevorzugten Ausführungsform dienen eine oder mehrere instabile Stellpositionen dazu, ein Funktionsprogramm temporär auszuführen und nach einer vorbestimmten Zeit oder nach Ablauf eines Funktionsprogramms automatisch zu beenden. Beispielsweise kann an dem Küchengerät manuell als Funktionsprogramm Kneten ausgewählt werden, woraufhin das Wirkmittel des Drehschalters automatisch temporär aktiviert wird. Bringt der Benutzer die Drehscheibe daraufhin in die Stellposition, die mit der instabilen Schaltposition des Drehschalters korrespondiert, so wird die Drehscheibe durch die vom Wirkmittel erzeugte äußere Haltekraft dort temporär gehalten. Nach Ablauf des Funktionsprogramms oder eines vorgegebenen Zeitintervalls kann das Wirkmittel automatisch deaktiviert werden und die Drehscheibe von der instabilen Stellposition selbsttätig vorzugsweise in eine stabile Stellposition zurückrotieren, beispielsweise unter Wirkung eines elastischen Elements. Die stabile Stellposition ist vorzugsweise die Nullstellung der Drehscheibe. In diesem Fall wird das elektrisch betreibbare Küchengerät oder der Motor des elektrisch betreibbaren Küchengerätes abgeschaltet oder in einen Ruhezustand versetzt, sobald die Drehscheibe von der instabilen Stellposition in die Nullstellung rotiert. In Ausführungsformen kann aber auch die instabile Stellposition die Nullstellung sein, während eine stabile Stellposition eine Stellung ist, in der der Motor mit einer Leistung betrieben wird. So kann eine Zeitschaltuhr realisiert werden, um beispielsweise das Küchengerät temporär für ein bestimmtes Zeitintervall zu deaktivieren und nach Ablauf dieses Zeitintervalls durch automatisches Deaktivieren des Wirkmittels ein automatisches Umschalten des Drehschalters in eine stabile Schaltposition herbeizuführen, in der der Motor des Küchengeräts in Folge dessen automatisch aktiviert wird.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben. Es zeigen schematisch:
Figur 1 eine Ansicht eines Drehschalters eines erfindungsgemäßen Küchengeräts von der Innenseite des Küchengerätes her betrachtet; und
Figur 2 eine Ansicht eines Drehschalters für ein erfindungsgemäßes Küchengerät, von der Außenseite des Küchengerätes her betrachtet.

### Detaillierte Beschreibung von Ausführungen der Erfindung

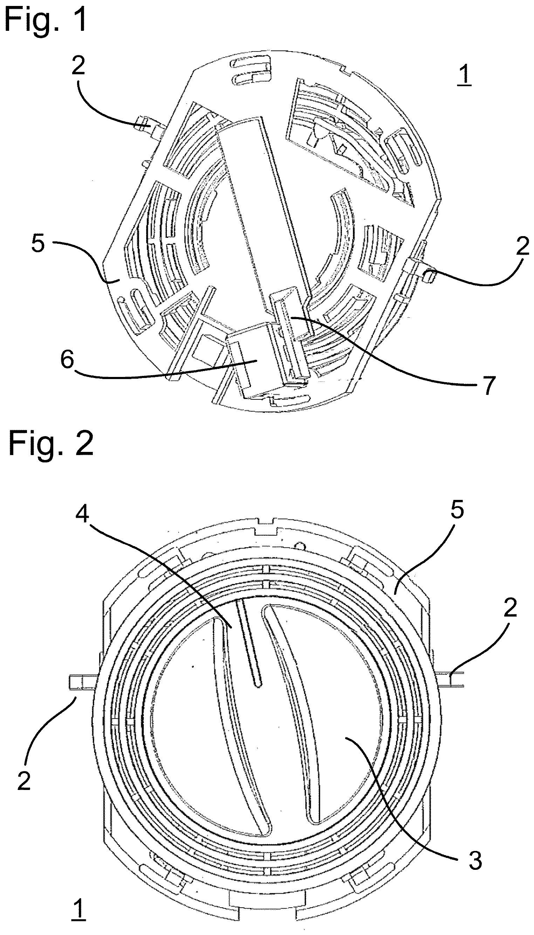

Die Figuren 1 und 2 zeigen zwei unterschiedliche Ansichten eines Drehschalters 1 eines elektrisch betreibbaren Küchengeräts (nicht dargestellt), in diesem Fall einer Universalküchenmaschine, gemäß der Erfindung. Die Ansicht in Figur 1 zeigt die Seite des Drehschalters 1, die in montiertem Zustand des Küchengeräts nach innen weist. Die Ansicht in Figur 2 zeigt hingegen die Seite des Drehschalters 1, die in montierter Ansicht des Küchengeräts in Bezug auf das Gehäuse des Küchengeräts nach außen weist. Der Drehschalter 1 gemäß den Figuren 1 und 2 ist als separate Baugruppe des Küchengeräts ausgeführt und kann beispielsweise über Rastarme 2 mit dem Gehäuse des Küchengeräts lösbar verbunden werden. Im Wesentlichen umfasst der Drehschalter 1 nur eine Drehscheibe 3, die eine Handhabe 4 aufweist, und einen Tragrahmen 5 für die Drehscheibe 3. Die Drehscheibe 3 ist an dem Tragrahmen 5 in einer Ebene rotierbar gelagert. Die Rotationsebene liegt im Wesentlichen parallel zur Oberfläche der Drehscheibe 3.

Der Drehschalter 1 ist auch von seiner Funktionsweise her verhältnismäßig einfach eingerichtet. Der Drehschalter 1 weist zwei Stellpositionen für die Drehscheibe 3 auf und kennt somit zwei damit korrespondierende Schaltpositionen. Eine der beiden Stellpositionen entspricht einer stabilen Schaltposition des Drehschalters 1. Die stabile Schaltposition ist eine Nullstellung. Sie ist mittels einer diskreten Stellposition für die Drescheibe 3 realisiert. In dieser Nullstellung als Stellposition verursacht die Drehscheibe 3, dass ein Motor des Küchengerätes deaktiviert ist. Zudem weist der Drehschalter 1 genau eine instabile Schaltposition auf. Die instabile Schaltposition korrespondiert mit einer instabilen Stellposition der Drehscheibe 3, durch die hervorgerufen wird, dass der Motor eine festgelegte Leistung für ein Bearbeitungswerkzeug des Küchengeräts bereitstellt. Der Drehschalter 1 ist so eingerichtet, dass ein elastisches Element (nicht dargestellt), in der vorliegenden Ausführungsform eine Schraubenfeder, die Drehscheibe 3 in die Nullstellung vorspannt. Dreht ein Benutzer die Drehscheibe 3 mittels der Handhabe 4 manuell in die instabile Stellposition, so wird, so lange die Drehscheibe 3 sich, durch die äußere Haltekraft gehalten, in der instabilen Stellposition befindet, der Motor des Küchengeräts angetrieben und seine Leistung für ein Bearbeitungswerkzeug bereitgestellt. In den Figuren 1 und 2 befindet sich der Drehschalter 1 in der instabilen Schaltposition, in der sich die Drehscheibe 3 in der instabilen Stellposition befindet.

In dem erfindungsgemäßen Küchengerät ist vorgesehen, dass das Küchengerät ein Wirkmittel 6 zum Erzeugen einer äußeren Haltekraft aufweist, durch die die Drehscheibe 3 in der instabilen Stellposition temporär gehalten werden kann. Im vorliegenden Ausführungsbeispiel ist das Wirkmittel 6 ein elektromechanisches Wirkmittel, genauer ein Elektromagnet. Das Wirkmittel 6 ist an der separaten Baugruppe des Drehschalters 1 angeordnet, in diesem Fall am Tragrahmen 5 für die Drehscheibe 3. Das Wirkmittel 6 kann durch einen elektrischen Schaltkreis des Küchengeräts aktiviert und deaktiviert werden. Zu diesem Zweck ist eine Steuereinheit in dem Küchengerät angeordnet, die den Elektromagneten als Wirkmittel 6 aktivieren und deaktivieren kann. An der Drehscheibe 3 ist ein Gegenwirkmittel 7 angeordnet, das mit dem Wirkmittel 6 interagieren kann, so dass die Drehscheibe 3 durch das Wirkmittel 6 temporär in der instabilen Stellposition gehalten werden kann. Im vorliegenden Fall ist das Gegenwirkmittel 7 eine dünne Eisenplatte.

Das erfindungsgemäße Küchengerät ist so eingerichtet, dass der Benutzer, im vorliegenden Ausführungsbeispiel über ein Tastenfeld (nicht dargestellt), eine Funktion der Universalküchenmaschine anwählt, beispielsweise eine Knetfunktion. Eine Steuereinheit des Küchengeräts aktiviert daraufhin einen elektronischen Uhrbaustein, der einen funktionsspezifischen Countdown von beispielsweise, in dem Fall der Knetfunktion, 5 Minuten vorbereitet. Anschließend wird durch die Steuereinheit das Wirkmittel 6 aktiviert. Der Benutzer verstellt daraufhin die Drehscheibe 3 von der stabilen Stellposition, also der Nullposition, in die instabile Stellposition. In dieser Stellposition wird durch die Schaltverbindung innerhalb des Drehschalters 1 der Motor des Küchengeräts aktiviert und gleichzeitig beginnt der Countdown zu laufen. Das Wirkmittel 6 bewirkt in magnetischer Interaktion mit dem Gegenwirkmittel 7, dass die Drehscheibe 3 in der instabilen Stellposition gehalten wird, bis der Countdown abgelaufen ist. Dann wird durch die Steuereinheit das Wirkmittel 6 deaktiviert, so dass das Wirkmittel 6 nicht länger das Gegenwirkmittel 7 magnetisch festhält. Das elastische Rückstellelement führt die Drehscheibe 3 aufgrund der nun fehlenden äußeren Haltekraft zwischen Wirkmittel 6 und Gegenwirkmittel 7 wieder in die stabile Stellposition, die Nullstellung, zurück; der Motor des Küchengeräts wird automatisch deaktiviert und der Knetvorgang endet ohne Zutun des Benutzers.

Ein erfindungsgemäßes elektrisch betreibbares Küchengerät kann somit den Vorteil haben, dass für ein bestimmtes Zeitintervall eine Arbeitsleistung durch den Motor des Küchengeräts erbracht werden kann und anschließend der Motor des Küchengeräts automatisch deaktiviert wird. Der Benutzer muss weder den Motorbetrieb aufrecht erhalten, indem er durch manuelles Halten der Drehscheibe 3 in der instabilen Stellposition den Schaltkreis des Drehschalters 1 für den Betrieb des Motors geschlossen hält, noch muss er eine Zeit im Auge behalten, wann der gewünschte Bearbeitungsauftrag abgeschlossen ist. Stattdessen muss er die Drehscheibe 3 nur zu Beginn des Bearbeitungsauftrags manuell in die instabile Stellposition bringen, in der sie dann bis zum Ende eines vorprogrammierbaren Zeitintervalls durch das Wirkmittel 6 automatisch gehalten wird. Auf diese Weise wird die Benutzerfreundlichkeit eines Küchengeräts verbessert, weil der Benutzer während des Ablaufs des Funktionsprogramms andere Tätigkeiten ausführen kann. Zudem kann die Sicherheit des Küchengeräts verbessert sein, wenn bei einem Stromausfall das Wirkmittel seine Wirkung verliert und daraufhin die Drehscheibe 3 automatisch aus der instabilen Stellposition durch die mechanische Vorspannung in eine Nullstellung zurückfällt, so dass auch der Drehschalter 1 von einer instabilen Schaltposition wieder in eine stabile Schaltposition, die einer Stromkreisunterbrechung entspricht, zurückkehrt. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Drehschalter
- 2: Rastarm
- 3: Drehscheibe
- 4: Handhabe
- 5: Tragrahmen
- 6: Wirkmittel
- 7: Gegenwirkmittel

## Patentansprüche

1. Elektrisch betreibbares Küchengerät,
das einen Drehschalter (1), der eine Drehscheibe (3) aufweist, umfasst,
wobei der Drehschalter (1) zwei oder mehr Stellpositionen für die Drehscheibe (3) aufweist, von denen eine oder mehr Stellpositionen als instabile Stellpositionen für die Drehscheibe (3) eingerichtet sind, in der oder in denen die Drehscheibe (3) temporär, unter Einwirkung einer äußeren Haltekraft, verharren kann,
**wobei**
das Küchengerät ein Wirkmittel (6) zum Erzeugen einer äußeren Haltekraft aufweist, durch die die Drehscheibe (3) in einer oder in mehreren instabilen Stellpositionen temporär gehalten werden kann **dadurch gekennzeichnet, dass** das Wirkmittel (6) ein elektromechanisches Wirkmittel ist.

2. Elektrisch betreibbares Küchengerät nach Anspruch 1,
**dadurch gekennzeichnet, dass**
das elektrisch betreibbare Küchengerät eine Universalküchenmaschine ist.

3. Elektrisch betreibbares Küchengerät nach einem der vorhergehenden Ansprüche,
**dadurch gekennzeichnet, dass**
die Drehscheibe (3) eine Handhabe aufweist.

4. Elektrisch betreibbares Küchengerät nach einem der vorhergehenden Ansprüche,
**dadurch gekennzeichnet, dass**
eine oder mehrere der Stellpositionen der Drehscheibe (3) stabile Stellpositionen sind.

5. Elektrisch betreibbares Küchengerät nach einem der vorhergehenden Ansprüche,
**dadurch gekennzeichnet, dass**
eine oder mehrere der Stellpositionen der Drehscheibe dazu dienen, eine Motorleistung des Küchengeräts auszuwählen.

6. Elektrisch betreibbares Küchengerät nach einem der vorhergehenden Ansprüche,
**dadurch gekennzeichnet, dass**
das Küchengerät für die Drehscheibe (3) ein elastisches Rückstellelement aufweist.

7. Elektrisch betreibbares Küchengerät nach Anspruch 6,
**dadurch gekennzeichnet, dass**
das elastische Rückstellelement als Schraubenfeder ausgeführt ist.

8. Elektrisch betreibbares Küchengerät nach einem der vorhergehenden Ansprüche,
**dadurch gekennzeichnet, dass**
der Drehschalter (1) als separate Baugruppe ausgeführt ist.

9. Elektrisch betreibbares Küchengerät nach Anspruch 8,
**dadurch gekennzeichnet, dass**
das Wirkmittel (6) an der separaten Baugruppe angeordnet ist.

10. Elektrisch betreibbares Küchengerät nach einem der vorhergehenden Ansprüche,
**dadurch gekennzeichnet, dass**
das Küchengerät so eingerichtet ist, dass es einen Bedienbereich aufweist, über den ein Funktionsprogramm des Küchengeräts auswählbar ist.

11. Elektrisch betreibbares Küchengerät nach einem der vorhergehenden Ansprüche,
**dadurch gekennzeichnet, dass**
eine oder mehrere instabile Stellpositionen dazu dienen, ein Funktionsprogramm temporär auszuführen und nach einer vorbestimmten Zeit oder nach Ablauf eines Funktionsprogramms automatisch ohne Zutun des Benutzers zu beenden.

12. Verwendung eines Drehschalters in einem elektrisch betreibbaren Küchengerät, wobei das Küchengerät ein Wirkmittel (6) zum Erzeugen einer äußeren Haltekraft aufweist, so dass eine Drehscheibe (3) des Drehschalters (1) durch diese äußere Haltekraft in einer oder in mehreren instabilen Stellpositionen temporär gehalten werden kann.

13. Verwendung eines Drehschalters (1) nach Anspruch 13,
**dadurch gekennzeichnet, dass**
das elektrisch betreibbare Küchengerät eine Universalküchenmaschine ist.

14. Verwendung eines Drehschalters (1) nach Anspruch 13 oder 14,
**dadurch gekennzeichnet, dass**
das Wirkmittel (6) ein elektromechanisches Wirkmittel ist.

## Claims

1. Electrically operable kitchen appliance,
which comprises a rotary switch (1) which has a rotary disk (3),
wherein the rotary switch (1) has two or more setting positions for the rotary disk (3), of which one or more setting positions are set up as unstable setting positions for the rotary disk (3), in which setting position or setting positions the rotary disk (3) can temporarily remain, under the effect of an external retention force,
**wherein**
the kitchen appliance has an agent (6) for generating an external retention force, by which the rotary disk (3) can be temporarily held in one or more unstable setting positions, **characterised in that**
the agent (6) is an electromechanical agent.

2. Electrically operable kitchen appliance according to claim 1,
**characterised in that**
the electrically operable kitchen appliance is a universal kitchen machine.

3. Electrically operable kitchen appliance according to one of the preceding claims,
**characterised in that**
the rotary disk (3) has a handle.

4. Electrically operable kitchen appliance according to one of the preceding claims,
**characterised in that**
one or more of the setting positions of the rotary disk (3) are stable setting positions.

5. Electrically operable kitchen appliance according to one of the preceding claims,
**characterised in that**
one or more of the setting positions of the rotary disk are used to select a motor output of the kitchen appliance.

6. Electrically operable kitchen appliance according to one of the preceding claims,
**characterised in that**
the kitchen appliance has an elastic reset element for the rotary disk (3).

7. Electrically operable kitchen appliance according to claim 6,
**characterised in that**
the elastic reset element is embodied as a helical spring.

8. Electrically operable kitchen appliance according to one of the preceding claims,
**characterised in that**
the rotary switch (1) is embodied as a separate subassembly.

9. Electrically operable kitchen appliance according to claim 8,
**characterised in that**
the agent (6) is arranged on the separate subassembly.

10. Electrically operable kitchen appliance according to one of the preceding claims,
**characterised in that**
the kitchen appliance is set up such that it has an operating area, by way of which a functional program of the kitchen appliance can be selected.

11. Electrically operable kitchen appliance according to one of the preceding claims,
**characterised in that**
one or more unstable setting positions are used to temporarily execute a functional program and after a predetermined time or on termination of a functional program to end said functional program automatically without intervention by the user.

12. Use of a rotary switch in an electrically operable kitchen appliance, wherein the kitchen appliance has an agent (6) for generating an external retention force, such that a rotary disk (3) of the rotary switch (1) can be temporarily held by said external retention force in one or more unstable setting positions.

13. Use of a rotary switch (1) according to claim 12,
**characterised in that**
the electrically operable kitchen appliance is a universal kitchen machine.

14. Use of a rotary switch (1) according claim 12 or 13,
**characterised in that**
the agent (6) is an electromechanical agent.

## Revendications

1. Appareil de cuisine électrique qui comprend un commutateur rotatif (1) qui présente une plaque tournante (3), dans lequel le commutateur rotatif (1) présente deux positions de réglage ou plus pour la plaque tournante (3), dont une position de réglage ou plus sont exécutées comme positions de réglage instables pour la plaque tournante (3), dans laquelle ou dans lesquelles la plaque tournante (3) peut demeurer temporairement, sous l'effet d'une force de maintien extérieure, **dans lequel** l'appareil de cuisine présente un moyen (6) de génération d'une force de maintien extérieure permettant de maintenir temporairement la plaque tournante (3) dans une ou plusieurs positions de réglage instables, **caractérisé en ce que** le moyen (6) est un moyen électromécanique.

2. Appareil de cuisine électrique selon la revendication 1, **caractérisé en ce que** l'appareil de cuisine électrique est un robot ménager universel.

3. Appareil de cuisine électrique selon l'une des revendications précédentes, **caractérisé en ce que** la plaque tournante (3) présente une manette.

4. Appareil de cuisine électrique selon l'une des revendications précédentes, **caractérisé en ce qu**'une ou plusieurs positions de réglage de la plaque tournante (3) sont des positions stables.

5. Appareil de cuisine électrique selon l'une des revendications précédentes, **caractérisé en ce qu**'une ou plusieurs positions de réglage de la plaque tournante servent à sélectionner une puissance du moteur de l'appareil de cuisine.

6. Appareil de cuisine électrique selon l'une des revendications précédentes, **caractérisé en ce que** l'appareil de cuisine présente pour la plaque tournante (3) un élément de rappel élastique.

7. Appareil de cuisine électrique selon la revendication 6, **caractérisé en ce que** l'élément de rappel élastique est exécuté sous forme de ressort à boudin.

8. Appareil de cuisine électrique selon l'une des revendications précédentes, **caractérisé en ce que** le commutateur rotatif (1) est exécuté sous forme de module distinct.

9. Appareil de cuisine électrique selon la revendication 8, **caractérisé en ce que** le moyen (6) est disposé sur le module distinct.

10. Appareil de cuisine électrique selon l'une des revendications précédentes, **caractérisé en ce que** l'appareil de cuisine est exécuté de sorte à présenter une zone de commande permettant de sélectionner un programme de fonctionnement de l'appareil de cuisine.

11. Appareil de cuisine électrique selon l'une des revendications précédentes, **caractérisé en ce qu**'une ou plusieurs positions de réglage instables servent à exécuter temporairement un programme de fonctionnement et à y mettre fin automatiquement après une durée déterminée au préalable ou au terme d'un programme de fonctionnement, sans intervention de l'utilisateur.

12. Utilisation d'un commutateur rotatif dans un appareil de cuisine électrique, dans laquelle l'appareil de cuisine présente un moyen (6) pour la génération d'une force de maintien extérieure, de sorte qu'une plaque tournante (3) du commutateur rotatif (1) puisse être maintenue temporairement dans une ou plusieurs positions de réglage instables par cette force de maintien extérieure.

13. Utilisation d'un commutateur rotatif (1) selon la revendication 13, **caractérisée en ce que** l'appareil de cuisine électrique est un robot ménager universel.

14. Utilisation d'un commutateur rotatif (1) selon la revendication 13 ou 14, **caractérisée en ce que** le moyen (6) est un moyen électromécanique.
